# EUROPÄISCHE PATENTSCHRIFT

(11) **EP 1 724 893 B1**
(45) Veröffentlichungstag und Bekanntmachung des Hinweises auf die Patenterteilung: **30.12.2009**
(21) Anmeldenummer: 06111510.1
(22) Anmeldetag: 21.03.2006
(51) Int. Cl.: H02G 1/12

(54) **Werkzeug zum Abmanteln eines Kabels**
Tool for stripping a cable
Outil pour dénuder un câble

(30) Priorität: 18.05.2005 DE 202005008034 U
(43) Veröffentlichungstag der Anmeldung: 22.11.2006
(73) Patentinhaber: Weidmüller Interface GmbH & Co. KG, 32758 Detmold (DE)
(72) Erfinder: Schmode, Hartmut, 32825, Blomberg (DE)
(74) Vertreter: Dantz, Jan Henning

(56) Entgegenhaltungen:
- DE-U- 6 602 761
- US-A- 4 329 891
- US-B1- 6 308 417

## Beschreibung

Die vorliegende Erfindung betrifft ein Werkzeug zum Abmanteln eines Kabels gemäß dem Oberbegriff des Anspruchs 1.

Derartige Werkzeuge dienen dazu, den Isoliermantel eines elektrischen Kabels abschnittsweise zu entfernen, wozu zwei parallele umfängliche Einschnitte des Isoliermantels sowie ein axialer Schnitt zwischen den beiden Einschnitten eingebracht werden, so dass der Isoliermantel problemlos entfernt werden kann.

Ein solches Werkzeug ist beispielsweise aus der DE 35 12 065 C1 bekannt.

Dabei sind die beiden Klemmschenkel, von denen einer fest positioniert ist und zwei Schneidklingen zum Einbringen der umfänglichen Einschnitte und der andere eine Schneidklinge zum Einbringen des axialen Schnittes aufweist, durch eine gemeinsame Schwenkachse miteinander verbunden.

Zur Handhabung dieses Werkzeuges, unter anderem auch, um eine ausreichende Klemmkraft durch eine eingesetzte Druckfeder aufbringen zu können, ist eine relativ große Länge der Klemmschenkel erforderlich, die jedoch die Verwendungsfähigkeit des Werkzeuges stark einschränkt. Dies vor allem deshalb, weil Abisolierarbeiten auch an bereits installierten Kabeln vorgenommen werden müssen, wobei vielfach sehr beengte Platzverhältnisse herrschen, die ein ungehindertes Umschwenken des Werkzeuges um das Kabel gar nicht oder nur beschwert erlauben.

Aus der US 4 329 891 A ist ein gattungsgemäßes Werkzeug bekannt, das zwei verschwenkbare, federbelastete Klemmbacken aufweist, die auf abständig zueinander in einem Tragteil angeordneten Schwenkachsen gelagert sind.

Der vorliegenden Erfindung liegt die Aufgabe zugrunde, ein Werkzeug der gattungsgemäßen Art so weiter zu entwickeln, dass es konstruktiv einfachst aufgebaut ist und seine Handhabungsfähigkeit verbessert wird.

Diese Aufgabe wird durch ein Werkzeug mit den Merkmalen des Anspruchs 1 gelöst. Um erfindungsgemäß eine synchrone Verschwenkung der Klemmbacken zu erreichen, greifen diese formschlüssig ineinander, wozu konzentrisch um die jeweiligen Schwenkachsen Verzahnungsbereiche vorgesehen sind, die miteinander korrespondieren.

Durch diese konstruktive Ausbildung kann das Werkzeug radial relativ zum Hebel sehr kurz gehalten werden, etwa 40 mm oder weniger, wobei an jede Klemmbacke ein Griffhebel angeformt ist, mit dem die Klemmbacke um die zugeordnete Schwenkachse verschwenkbar ist.

Des weiteren ist nach einer vorteilhaften Ausbildung der Erfindung vorgesehen, dass die freien Enden der Klemmbacken mit ineinander verschränkbaren Zähnen versehen sind, durch die gewährleistet ist, dass unterschiedlichste Kabeldurchmesser fest eingeklemmt werden.

Dabei dient als Widerlager für das Kabel das Tragteil, das vorzugsweise zur Aufnahme des Kabels muldenförmig ausgebildet ist.

Weiter ist vorgesehen, die Messerklinge in dem Tragteil zu halten und zwar in einer Traghülse, die in dem Tragteil befestigt ist. Dabei ist die Traghülse so in dem Tragteil gelagert, dass eine Verdrehung um 90° möglich ist, so dass die einliegende Messerklinge sowohl zum umfänglichen Abschneiden des Isoliermantels wie auch zum axialen Aufschneiden eingesetzt werden kann.

Zur Erkennung der jeweiligen Stellung der Messerklinge kann ein Sichtfenster vorgesehen sein, durch dass die Messerklinge von außen erkennbar ist. Denkbar ist aber auch, die relevanten Teile aus einem transparenten Kunststoff herzustellen.

Eine andere Möglichkeit der Positionserkennung der Messerklinge besteht darin, die Traghülse mit einer Markierung, beispielsweise einem Pfeil, einem Hebel oder dergleichen zu versehen, der entsprechend der Position der Messerklinge ausgerichtet ist.

Zur schnitttiefen Einstellung der Messerklinge, die erforderlich ist, um unterschiedlich dicke Isoliermäntel aufschneiden zu können, ist die verdrehsicher in der Traghülse gehaltene Messerklinge verschiebegesichert in einer Einstellhülse gehalten, die relativ zur Traghülse axial bewegbar ist. Dabei kann die axiale Bewegung der Einstellhülse und damit die Schnitttiefenverstellung der, wie erwähnt, zwar verschiebegesichert, jedoch verdrehbar an der Einstellhülse gelagerten Messerklinge durch eine Kulissenführung erzwungen werden, die beispielsweise aus einer Kulissenbahn in der Einstellhülse und einem Kulissenzapfen in der Traghülse besteht.

Statt dessen besteht auch die Möglichkeit, die Einstellhülse verschiebegesichert, jedoch drehbar in der Traghülse anzuordnen. Dabei ist die Messerklinge verdreh- und axial gesichert in einem Querbolzen angeordnet, der in einer Kulissenbahn der Einstellhülse geführt ist und der gegenüber der Traghülse axial verschieblich gehalten ist. Bei Verdrehen der Einstellhülse wird somit der Querbolzen und damit die Messerklinge entsprechend der Kulissenbahn axial bewegt, wodurch sich die Schnitttiefenveränderung der Messerklinge ergibt.

Der Vorteil der Kulissenführung besteht darin, dass bei geringer Drehung der Einstellhülse eine große Schnitttiefenverstellung möglich ist, wobei die Kulissenbahn selbstverständlich entsprechend der gewünschten Tiefenverstellung in Drehrichtung der Einstellhülse geneigt verläuft.

Neben einer zentrischen Anordnung der Messerklinge in der Traghülse, ist nach einem weiteren Gedanken der Erfindung vorgesehen, die Messerklinge exzentrisch anzuordnen, so dass die Messerklinge selbsttätig von einer Längsschnittposition mit Beginn eines Rundschnitts in diese Rundschnittposition geführt wird. Die Verstellung der Messerklinge mittels der Traghülse ist somit lediglich dann erforderlich, wenn die Messerklinge von einer Rundschnitt- in eine Längsschnittstellung gebracht werden soll.

Weitere vorteilhafte Ausbildungen sind in den Unteransprüchen gekennzeichnet.

Ausführungsbeispiele der Erfindung werden nachfolgend anhand der beigefügten Zeichnungen beschrieben.

### Es zeigen:

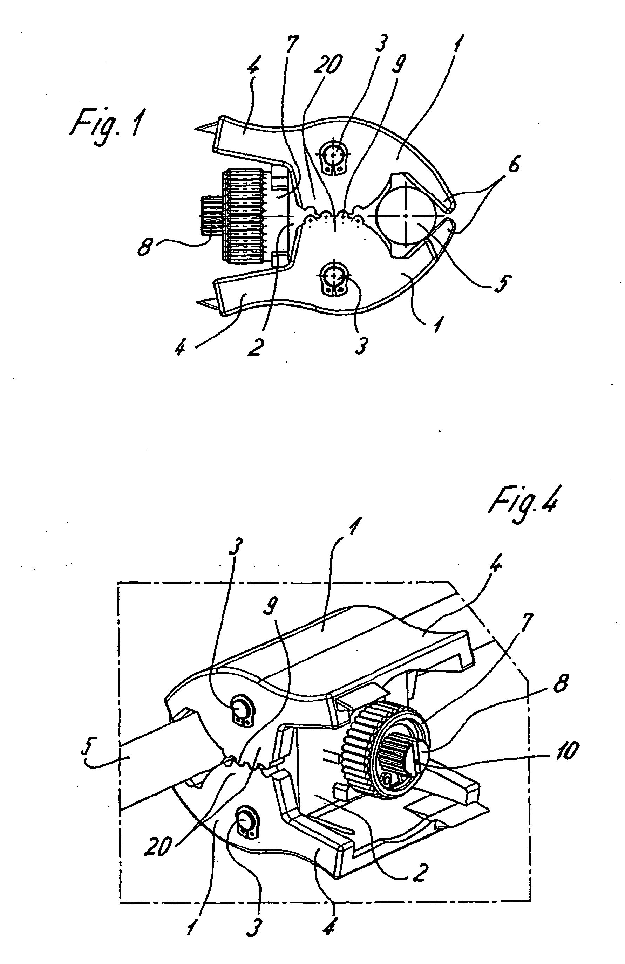

- Figur 1: ein erfindungsgemäßes Werkzeug in Funktionsstellung in einer Seitenansicht

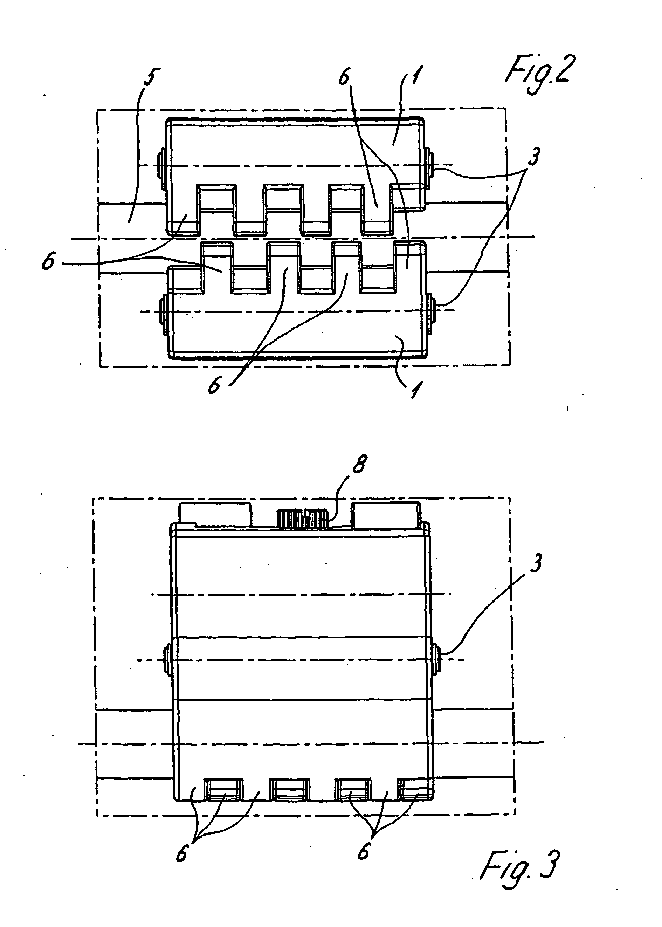

- Figur 2: das Werkzeug in einer Vorderansicht
- Figur 3: das Werkzeug in einer Draufsicht
- Figur 4: das Werkzeug in einer perspektivischen Ansicht
- Figur 5: einen Schnitt durch das Werkzeug gemäß der Linie V - V in Figur 6
- Figur 6: eine Vorderansicht des geöffneten Werkzeugs
- Figur 7: das geöffnete Werkzeug in einer perspektivischen Ansicht
- Figur 8: eine vergrößerte Einzelheit des Werkzeuges
- Figur 9: ein weiteres Ausführungsbeispiel des erfindungsgemäßen Werkzeuges in einer geöffneten Stellung in einer perspektivischen Ansicht
- Figur 10: eine vergrößerte Einzelheit des Werkzeuges nach Figur 9
- Figur 11: eine Einzelheit des Werkzeuges in einer perspektivischen Ansicht
- Figur 12: ein Werkzeug nach der Erfindung in einer Explosivdarstellung

In den Figuren ist ein Werkzeug zum Abmanteln eines Kabels 5 dargestellt, das zwei zueinander verschwenkbare, durch Federdruck mittels einer Schenkelfeder 19 gegeneinander verschwenkbare Klemmbacken 1 aufweist, zwischen denen das abzumantelnde Kabel 5 festklemmbar ist.

Erfindungsgemäß sind die beiden Klemmbacken 1 jeweils auf einer Schwenkachse 3 gelagert, die abständig zueinander angeordnet in einem Tragteil 2 gehalten sind.

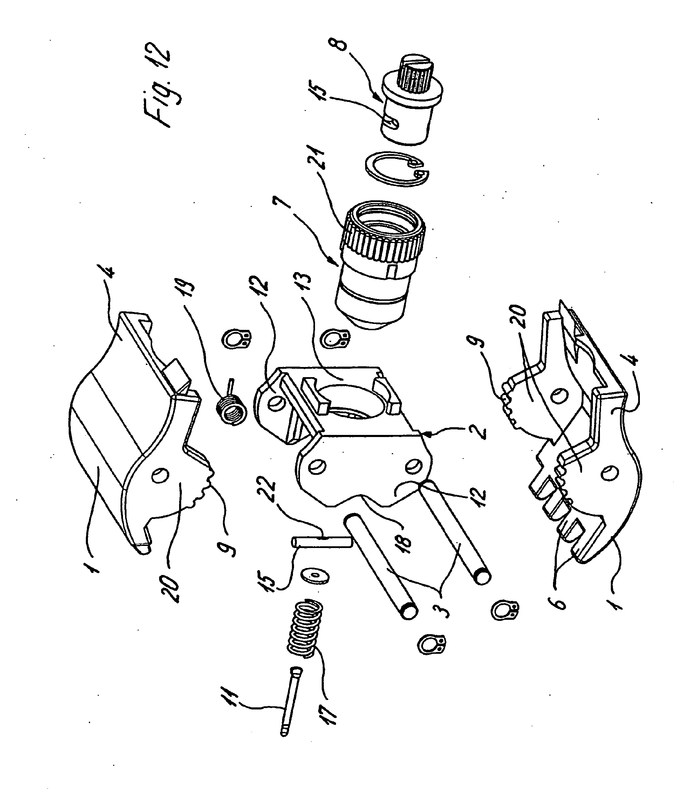

Dieses Tragteil 2 ist, wie die Figur 12 zeigt, U-förmig ausgebildet und weist zwei parallele Schenkel 12 sowie einen diese miteinander verbindenden Boden 13 auf. Die Schenkel 12 sind auf ihrem dem Boden 13 abgewandten freien Ende jeweils mit einer Mulde 18 versehen, in denen das Kabel 5 unter Druck der Klemmbacken 1 einliegt, so dass das Tragteil 2 ein Widerlager bildet.

An ihrem jeweiligen freien Ende sind die Klemmbacken 1 mit versetzt zueinander angeordneten Zähnen 6 versehen, die bei entsprechend kleinem Durchmesser des Kabels 5 ineinander verschränkt sind.

Dem jeweiligen verzahnten Ende gegenüberliegend und der Schwenkachse 3 nachgeordnet ist an jede Klemmbacke 1 ein Griffhebel 4 angeformt, wobei sich an der Innenseite eine der Griffhebel 4 die Schenkelfeder 19 mit ihrem einen Schenkel abstützt, so dass die Griffhebel 4 gespreizt und die Klemmbacken 1 aufeinander zu gedrückt werden. Die Schenkelfeder 19 ist auf der der Klemmbacke 1 zugeordneten Schwenkachse 3 gelagert.

Für eine gleichmäßige Betätigung der Klemmbacken 1 und auch für eine Übertragung der durch die Schenkelfeder 19 aufgebrachten Federkraft sind im Überdeckungsbereich mit den Schenkeln 12 des Tragteiles 2 an die beiden Klemmbacken 1 Flansche 20 angeformt, die jeweils mit Zähnen 9 versehen sind, die auf dem jeweils kreisbogenförmig ausgebildeten Flansch 20 angeordnet sind, wobei die Zähne 9 zweier benachbarter Flansche 20 der beiden Klemmbacken 1 ineinander greifen, so dass eine synchrone Schwenkbewegung der beiden Klemmbacken erreicht wird.

In dem Tragteil 2 ist verschiebegesichert, jedoch drehbar eine Traghülse 7 angeordnet, in der eine Messerklinge 11 längsverschiebbar gelagert ist. Durch die Verdrehbarkeit der Traghülse 7 ist die Schneidkante der Messerklinge 11 so zu positionieren, dass sie entweder einen Rundschnitt um das Kabel 5 herum oder, um 90° gedreht, einen Längsschnitt ausführen kann. Hierzu ist die Traghülse 7 im Bereich der Griffhebel 4 angreifbar, wobei zur besseren Handhabung die Traghülse 7 an diesem Ende mit einer Rändelung 21 versehen ist.

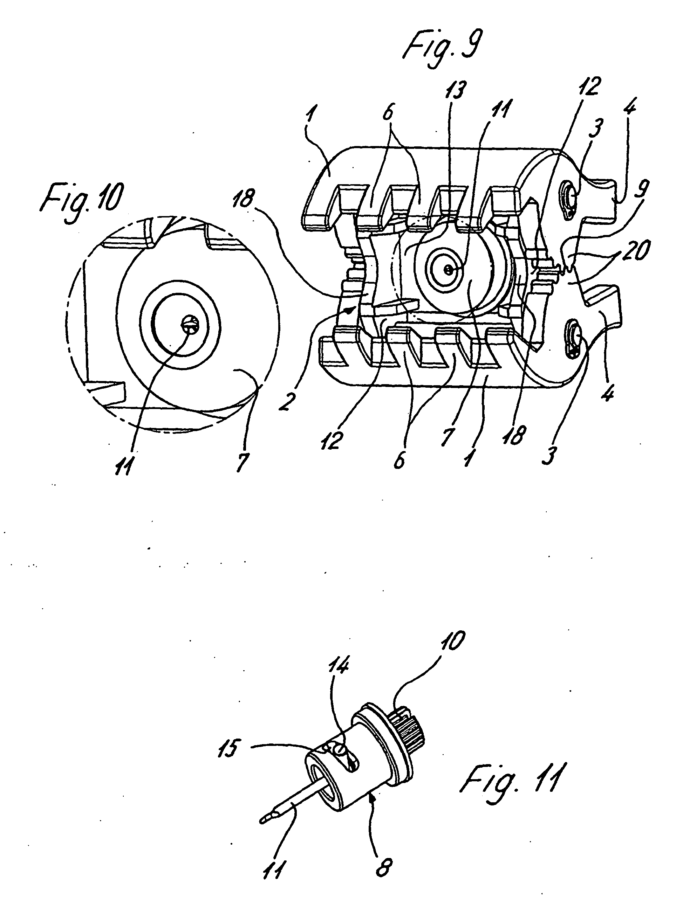

In der Traghülse 7 ist eine Einstellhülse 8 festgelegt, und zwar so, dass diese gegenüber der Traghülse 7 verdrehbar und axial gesichert ist. Mit Hilfe der Einstellhülse 8 ist die Schnitttiefe der Messerklinge 11 veränderbar. Hierzu ist die Messerklinge 11 mit ihrem der Schneidseite abgewandten Ende in einem Querbolzen 14 befestigt, der in einer Kulissenbahn 15 (Figuren 11 und 12) geführt ist, die in Querrichtung zur Längserstreckung der Messerklinge 11 geneigt verläuft.

Bei Betätigung der Einstellhülse 8, beispielsweise mittels eines Schraubendrehers, der in einen Schlitz 10 einsetzbar ist, bewegt sich der Querbolzen 14 und damit die Messerklinge 11 in axialer Richtung, entsprechend der Steigung der Kulissenbahn 15.

Da eine Schnitttiefenverstellung der Messerklinge 11 nur möglich ist, wenn der Querbolzen 14 gegenüber der Einstellhülse 8 relativ beweglich ist, ist der Querbolzen 14 in Längsnuten 16 der Traghülse 7 längsverschieblich und verdrehgesichert gelagert.

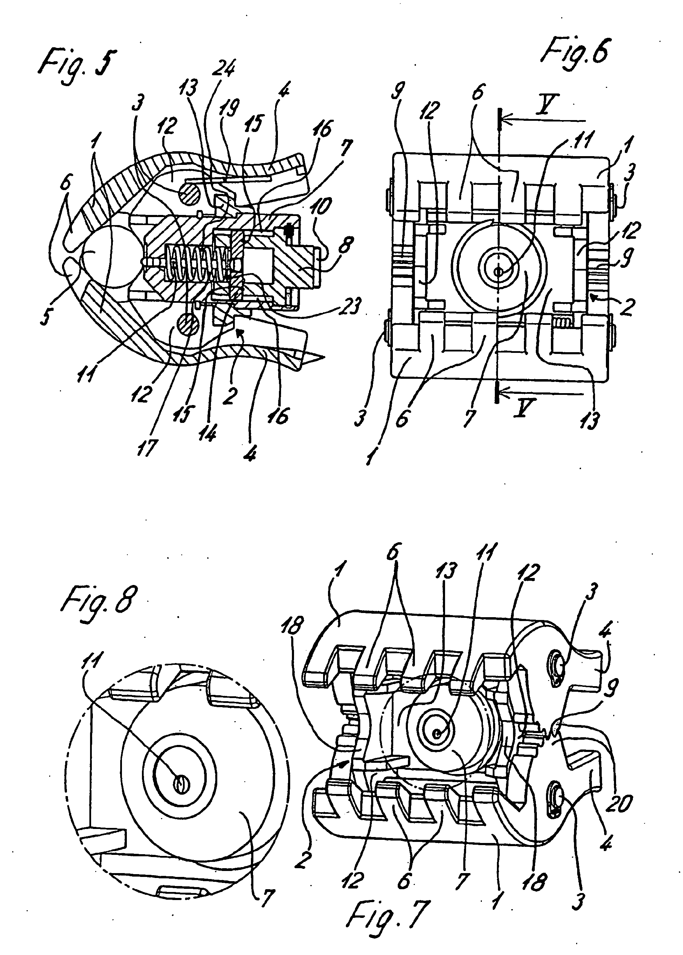

Wie die Figur 12 zeigt, ist die Messerklinge 11 mit ihrem der Schneide gegenüberliegenden, abgeflachten Ende in einen Schlitz 22 des Querbolzens 15 eingesteckt und durch eine Scheibe 23 (Figur 5) axial gesichert gehalten, die auf den Querbolzen 15 aufgesteckt ist und durch eine Druckfeder 17, die sich andererseits am Grund einer Stufenbohrung 24 der Traghülse 7 abstützt, gegen den Querbolzen 17 gedrückt wird. Dabei ist der Innendurchmesser der Scheibe 23 kleiner als die Breite des abgeflachten Endes der Messerklinge 11.

Bei dem in den Figuren 5 bis 8 gezeigten Beispiel ist die Messerklinge 11 exzentrisch in der Traghülse 7 angeordnet. Dabei nimmt die Messerklinge 11 eine, bezogen auf die Mittelachse des Kabels 5 untere Stellung ein, in der die Schneide für einen Rundschnitt sozusagen hochkant ausgerichtet ist.

Nach dem ersten Rundschnitt wird mittels der Traghülse 7 die Messerklinge 11 um 90° verdreht, so dass ihre Schneidkante entsprechend der Längsachse des Kabels 5 ausgerichtet ist und ein Längsschnitt durchgeführt werden kann. Für einen folgenden zweiten Rundschnitt richtet sich die Messerklinge 11 aufgrund der exzentrischen Anordnung selbsttätig in die Rundschnitt-Position aus, ohne dass eine Verstellung mittels der Traghülse 7 erforderlich ist.

In den Figuren 9 und 10 ist die zentrische Anordnung der Messerklinge 11 gezeigt, wobei hier die Position für einen Längsschnitt erkennbar ist, in der die Schneidkante in Längsachsrichtung des Kabels 5 ausgerichtet ist. Hier wird die Messerklinge nach jedem Schnitt an der Traghülse von Hand um 90° gedreht.

Prinzipiell besteht die Möglichkeit, zwei oder mehr Messerklingen vorzusehen, so dass in einem Arbeitsgang beide Rundschnitte durchgeführt werden können, während der Längsschnitt dadurch erfolgt, dass eine der Messerklingen aus dem Eingriffsbereich heraus gebracht wird und die andere Messerklinge, wie beschrieben um 90° gedreht zum Einsatz kommt.

### Bezugszeichenliste

- 1: Klemmbacke
- 2: Tragteil
- 3: Schwenkachse
- 4: Griffhebel
- 5: Kabel
- 6: Zahn
- 7: Traghülse
- 8: Einstellhülse
- 9: Verzahnung
- 10: Schlitz
- 11: Messerklinge
- 12: Schenkel
- 13: Boden
- 14: Querbolzen
- 15: Kulissenbahn
- 16: Nut
- 17: Druckfeder
- 18: Mulde
- 19: Schenkelfeder
- 20: Flansch
- 21: Rändelung
- 22: Schlitz
- 23: Scheibe
- 24: Stufenbohrung

## Patentansprüche

1. Werkzeug zum Abmanteln eines Kabels (5), mit zwei zueinander verschwenkbaren, federbelasteten Klemmbacken (1), zwischen denen das abzumantelnde Kabel (5) festklemmbar ist, sowie mindestens einer Messerklinge (11), wobei zwei Schwenkachsen (3), an denen jeweils eine der Klemmbacken (1) gelagert ist, abständig zueinander in einem Tragteil (2) angeordnet sind, **dadurch gekennzeichnet, dass** die Klemmbacken (1) die Schwenkbewegung synchronisierende, ineinander greifende Zähne (9) aufweisen.

2. Werkzeug nach Anspruch 1, **dadurch gekennzeichnet, dass** jede Klemmbacke (1) mindestens einen Flansch (20) aufweist, der bereichsweise kreisbogenförmig ausgebildet und in diesem Bereich mit den Zähnen (9) versehen ist.

3. Werkzeug nach Anspruch 1 oder 2, **dadurch gekennzeichnet, dass** das Tragteil (2) U-förmig ausgebildet ist, wobei die beiden parallel und mit Abstand zueinander angeordneten Schenkel (12) die Lagerung für die beiden Schwenkachsen (3) bilden.

4. Werkzeug nach einem der vorhergehenden Ansprüche, **dadurch gekennzeichnet, dass** jeder Schenkel (12) eine Mulde (18) aufweist, in die das Kabel (5) einlegbar ist.

5. Werkzeug nach einem der vorhergehenden Ansprüche, **dadurch gekennzeichnet, dass** die Messerklinge (11) in einer mit dem Tragteil (2) verbundenen Traghülse (7) gelagert ist.

6. Werkzeug nach einem der vorhergehenden Ansprüche, **dadurch gekennzeichnet, dass** die Traghülse (7) axial gesichert, jedoch drehbar in dem Tragteil (2) angeordnet ist.

7. Werkzeug nach einem der vorhergehenden Ansprüche, **dadurch gekennzeichnet, dass** die Messerklinge (11) verdrehgesichert und axial verschiebbar in der Traghülse (7) angeordnet ist.

8. Werkzeug nach einem der vorhergehenden Ansprüche, **dadurch gekennzeichnet, dass** die Messerklinge (11) mit einem Endbereich in einer Einstellhülse (8) gelagert ist, mit der die Messerklinge (11) axial verstellbar ist.

9. Werkzeug nach einem der vorhergehenden Ansprüche, **dadurch gekennzeichnet, dass** die Einstellhülse (8) in der Traghülse (7) angeordnet ist.

10. Werkzeug nach einem der vorhergehenden Ansprüche, **dadurch gekennzeichnet, dass** die Messerklinge (11) mittels einer in der Einstellhülse (8) vorgesehenen Kulissenführung verstellbar ist.

11. Werkzeug nach einem der vorhergehenden Ansprüche, **dadurch gekennzeichnet, dass** die Einstellhülse (8) eine Kulissenbahn (15) aufweist, in der ein Kulissenzapfen der Traghülse (7) geführt ist, wobei die Kulissenbahn (15) quer zur Axialverstellung der Messerklinge (11) geneigt verläuft.

12. Werkzeug nach einem der vorhergehenden Ansprüche, **dadurch gekennzeichnet, dass** die Messerklinge (11) axial und verdrehgesichert in einem Querbolzen (14) gehalten ist, der in der Kulissenbahn (15) geführt ist.

13. Werkzeug nach einem der vorhergehenden Ansprüche, **dadurch gekennzeichnet, dass** der Querbolzen (14) in mindestens einer, sich in axialer Verstellrichtung der Messerklinge (11) erstreckenden Nut (16) der Traghülse (7) gehalten ist.

14. Werkzeug nach einem der vorhergehenden Ansprüche, **dadurch gekennzeichnet, dass** die Klemmbacken (1) an ihren freien Enden mit Zähnen (6) versehen sind, die versetzt zueinander angeordnet und ineinander verschränkbar sind.

15. Werkzeug nach einem der vorhergehenden Ansprüche, **dadurch gekennzeichnet, dass** an den den Zähnen (6) gegenüber liegenden Seiten der Klemmbacken (1) Griffhebel (4) angeformt sind, wobei die Schwenkachsen (3) zwischen den Griffhebeln (4) und den Klemmbacken (1) positioniert sind.

16. Werkzeug nach einem der vorhergehenden Ansprüche, **dadurch gekennzeichnet, dass** an zumindest einer der Schwenkachsen (3) eine Schenkel feder befestigt ist, die sich andererseits an der Innenseite des zugeordneten Griffhebels (4) abstützt.

17. Werkzeug nach einem der vorhergehenden Ansprüche, **dadurch gekennzeichnet, dass** die Messerklinge (11) zentrisch oder exzentrisch in der Traghülse (7) angeordnet ist.

18. Werkzeug nach einem der vorhergehenden Ansprüche, **dadurch gekennzeichnet, dass** transparente Sichtfenster vorgesehen sind, mit denen die Stellung der Messerklinge (11) erkennbar ist.

19. Werkzeug nach einem der vorhergehenden Ansprüche, **dadurch gekennzeichnet, dass** die Traghülse (7) mit einer Markierung, wie einem Pfeil, einem Hebel oder dergleichen versehen ist, mit der die Stellung der Traghülse (7) erkennbar ist.

## Claims

1. Tool for stripping a cable (5), with two spring-tensioned clamping jaws (1) tiltable to one another, between which the cable (5) to be stripped can be clamped, and at least one knife edge (11), wherein two swivelling axes (3), to which is mounted a clamping jaw respectively, are arranged with a distance to one another in a carrier part (2), **characterised in that** the clamping jaws (1) have teeth (9) engaging one another, synchronising the swivelling movement.

2. Tool according to claim 1, **characterised in that** each clamping jaw (1) has at least one flange (20), which is formed circular in sections, and which is provided with teeth (9) in this region.

3. Tool according to claim 1 or 2, **characterised in that** the carrier part (2) is formed in a U-shaped manner, wherein the two parallel legs (12) arranged parallel and with a distance to one another, form the bearing for the two swivelling axes (3).

4. Tool according to one of the preceding claims, **characterised in that** each leg (12) has a recess (18), into which the cable can be inserted.

5. Tool according to one of the preceding claims, **characterised in that** the knife edge (11) is mounted in a carrier sleeve (7) connected to the carrier part (2).

6. Tool according to one of the preceding claims, **characterised in that** the carrier sleeve is arranged in an axially secured manner, but is rotatable in the carrier part (2).

7. Tool according to one of the preceding claims, **characterised in that** the knife edge (11) is arranged secured against rotation and axially displaceable in the carrier sleeve (7).

8. Tool according to one of the preceding claims, **characterised in that** the knife edge (11) is mounted in an adjusting sleeve (8) with one end region, with which the knife edge (11) can be adjusted in an axial manner.

9. Tool according to one of the preceding claims, **characterised in that** the adjusting sleeve (8) is arranged in the carrier sleeve (7).

10. Tool according to one of the preceding claims, **characterised in that** the knife edge (11) can be adjusted by means of a guide bar provided in the adjusting sleeve (8).

11. Tool according to one of the preceding claims, **characterised in that** the adjusting sleeve (8) has a link path (15), in which is guided a link pin of the carrier sleeve (7), wherein the link path (15) runs in a sloping manner transversely to the axial adjustment of the knife edge (11).

12. Tool according to one of the preceding claims, **characterised in that** the knife edge (11) is held in a transverse pin (14) in an axial manner and secured against rotation, which pin is guided in the link path (15).

13. Tool according to one of the preceding claims, **characterised in that** the transverse pin (14) is held in at least one groove (16) of the carrier sleeve (7) extending in the axial displacement direction of the knife edge (11).

14. Tool according to one of the preceding claims, **characterised in that** the clamping jaws (1) are provided with teeth (6) at their free ends, which are arranged to each other in an offset manner and which can be crossed with one another.

15. Tool according to one of the preceding claims, **characterised in that** grip levers (4) are moulded to the sides opposite the teeth (6), wherein the swivelling axes (3) are arranged between the grip levers (4) and the clamping jaws (1).

16. Tool according to one of the preceding claims, **characterised in that** a leg spring is secured to at least one of the swivelling axes (3), which spring is supported at the inner side of the assigned grip lever (4) on the other side.

17. Tool according to one of the preceding claims, **characterised in that** the knife edge (11) is arranged in the carrier sleeve (7) in a centrical or excentric manner.

18. Tool according to one of the preceding claims, **characterised in that** transparent viewing windows are provided, with which the position of the knife edge (11) can be detected.

19. Tool according to one of the preceding claims, **characterised in that** the carrier sleeve (7) is provided with a marking such as an arrow, a lever or the like, with which the position of the carrier sleeve (7) can be detected.

## Revendications

1. Outil pour dénuder un câble (5), avec deux mâchoires de serrage (1) sollicités par ressort et pivotant l'une par rapport à l'autre, entre lesquelles le câble (5) à dénuder peut être serré, ainsi qu'avec au moins une lame de couteau (11), deux axes de pivotement (3), au niveau desquels est montée respectivement l'une des mâchoires de serrage (1), étant disposés à distance l'un de l'autre dans un élément de support (2), **caractérisé en ce que** les mâchoires de serrage (1) présentent des dents (9) s'engrenant les unes dans les autres, synchronisant le mouvement de pivotement.

2. Outil selon la revendication 1, **caractérisé en ce que** chaque mâchoire de serrage (1) présente au moins une bride (20), qui est réalisée localement en forme d'arc de cercle et est dotée de dents (9) dans cette zone.

3. Outil selon la revendication 1 ou 2, **caractérisé en ce que** l'élément de support (2) est réalisé en forme de U, les deux branches (12) disposées parallèlement et à distance l'une de l'autre formant le logement pour les deux axes de pivotement (3).

4. Outil selon l'une des revendications précédentes, **caractérisé en ce que** chaque branche (12) présente une cavité (18), dans laquelle le câble (5) peut être inséré.

5. Outil selon l'une des revendications précédentes, **caractérisé en ce que** la lame de couteau (11) est logée dans une douille de support (7) reliée à l'élément de support (2).

6. Outil selon l'une des revendications précédentes, **caractérisé en ce que** la douille de support (7) est montée de manière axialement bloquée, mais rotative dans l'élément de support (2).

7. Outil selon l'une des revendications précédentes, **caractérisé en ce que** la lame de couteau (11) est montée de manière bloquée en rotation et axialement mobile dans la douille de support (7).

8. Outil selon l'une des revendications précédentes, **caractérisé en ce que** la lame de couteau (11) est montée par avec une zone d'extrémité dans une douille de réglage (8) avec laquelle la lame de couteau (11) est axialement réglable.

9. Outil selon l'une des revendications précédentes, **caractérisé en ce que** la douille de réglage (8) est disposée dans la douille de support (7).

10. Outil selon l'une des revendications précédentes, **caractérisé en ce que** la lame de couteau (11) peut être déplacée à l'aide d'un guide de coulisse prévu dans la douille de réglage (8).

11. Outil selon l'une des revendications précédentes, **caractérisé en ce que** la douille de réglage (8) présente une voie de coulisse (15), dans laquelle est guidé un tenon de coulisse de la douille de support (7), la voie de coulisse (15) s'étendant de manière inclinée transversalement au déplacement axial de la lame de couteau (11).

12. Outil selon l'une des revendications précédentes, **caractérisé en ce que** la lame de couteau (11) est maintenue axialement et de manière bloquée en rotation dans un tourillon transversal (14), qui est guidé dans la voie de coulisse (15).

13. Outil selon l'une des revendications précédentes, **caractérisé en ce que** le tourillon transversal (14) est maintenu dans au moins une rainure (16) de la douille de support (7) s'étendant dans un sens de déplacement axial de la lame de couteau (11).

14. Outil selon l'une des revendications précédentes, **caractérisé en ce que** les mâchoires de serrage (1) sont dotées au niveau de leurs extrémités libres de dents (6), qui sont disposées de manière décalée l'une par rapport à l'autre et peuvent s'imbriquer les unes dans les autres.

15. Outil selon l'une des revendications précédentes, **caractérisé en ce que** des poignées (4) sont surmoulées au niveau des côtés des mâchoires de serrage (1) opposés aux dents (6), les axes de pivotement (3) étant positionnés entre les poignées (4) et les mâchoires de serrage (1).

16. Outil selon l'une des revendications précédentes, **caractérisé en ce qu'**un ressort à branches, qui s'appuie de l'autre côté sur le côté intérieur de la poignée (4) associée, est fixé au niveau d'au moins un des axes de pivotement (3).

17. Outil selon l'une des revendications précédentes, **caractérisé en ce que** la lame de couteau (11) est disposée de manière centrée ou excentrée dans la douille de support (7).

18. Outil selon l'une des revendications précédentes, **caractérisé en ce que** des fenêtres transparentes sont prévues, grâce auxquelles la position de la lame de couteau (11) est visible.

19. Outil selon l'une des revendications précédentes, **caractérisé en ce que** la douille de support (7) est dotée d'un marquage, comme une flèche, un levier ou similaire, avec lequel la position de la douille de support (7) est visible.
